# EUROPEAN PATENT SPECIFICATION

(11) **EP 2 795 172 B1**
(45) Date of publication and mention of the grant of the patent: **25.04.2018**
(21) Application number: 11802315.9
(22) Date of filing: 05.12.2011
(51) Int. Cl.: F16L 58/08, F16L 58/18, F16L 9/147

(54) **HYBRID PIPING FOR CNG OPERATIONS AND METHOD OF PRODUCING THE SAME**
HYBRIDES LEITUNGSSYSTEM FÜR CNG-OPERATIONEN UND VERFAHREN ZU SEINER HERSTELLUNG
TUBAGE HYBRIDE POUR OPÉRATIONS RELATIVES À DES GNC ET PROCÉDÉS POUR LE PRODUIRE

(43) Date of publication of application: 29.10.2014
(73) Proprietor: Blue Wave Co S.A., 1643 Luxembourg (LU)
(72) Inventor: NETTIS, Francesco, London SW1X 8HN (GB); TOMASELLI, Vanni Neri, 1130 Luxembourg (LU)
(74) Representative: CSY St Albans
(86) International application number: PCT/EP2011/071790
(87) International publication number: WO 2013/083154

(56) References cited:
- CA-A1- 2 329 444
- US-A- 4 559 974
- US-A- 4 676 276

## Description

### Field of the invention

The invention relates to piping for transporting compressed natural gas (CNG). In particular, it relates to piping involving the use of composite materials.

The present invention also relates to methods of manufacturing or inspecting the above pipes.

### Background art

Pressure vessels for storing and transporting CNG have been the subject of research and development in the past years. This has lead to increasingly sophisticated pressure vessels, often involving the use of composite materials.

Pipes are used in CNG operations to interconnect pressure vessels, or to link the vessels with CNG loading or distribution equipment.

The pressure vessels are often seen to be the core components of a CNG operation. The pipes, on the other hand, are seen to be of a standard form, and thus of only a marginal value in terms of whether they are potential targets for development. Further, the pipes are already manufactured relatively cheaply, due to the volume of pipes produced everyday, and this low cost steers companies away from spending time and money on improving their performance and physical characteristics. As a result, CNG pipe networks are predominantly built using traditional, circular, steel pipes, but of a variety of different sections, i.e. larger pipes, smaller pipes and thicker/thinner pipes, with the appropriate section being chosen for supporting a specified flow rate and/or pressure (of the CNG passing therethrough). As such, there will be high pressure sections (suited e.g. to withstand pressures from 140 to 250bar, or even 300 bar), mid pressure sections (suited e.g. to withstand pressures of between 90 and 140 bar), and low pressure sections (suited e.g. to withstand pressures of between 30 and 90 bar). Further, since the high pressure pipes are typically both heavier and more expensive than the low pressure pipes, the pipe sections do get tailored to the given application, rather than there being simply an overcautious high-pressure specification for all applications.

Each pipe network within a given application will comprise a number of preformed pipes that are connected together. This can be by welding them together, or it can be by bolting them together by means of flanges or joints. There will also be stepped joints or stepped connections where the CNG pipe network comprises pipes of different diameters or wall thickness. These too can be welded together or bolted together.

US 4,676,276 A discloses a method of treating a pipe and product produced thereby according to the preamble of claim 1. CA 2,329,444 A1 discloses a pipe coating process. US 4,559974 A discloses an apparatus and method of arresting ductile fracture propagation.

### Technical problem to be solved

These steel (or other metal) pipes are recognised to be heavy, and thus difficult to transport. For the same reason, they are difficult to interconnect, either via welds or the bolted connections. Likewise supporting them in situ is difficult, whether clamped into a mount or secured in free-space via the end connections. These problems can be further compounded when the CNG pipework installation is located in a hostile environment, such as in off-shore locations, especially due to buoyancy issues when located on a ship (due to their weight) or corrosion issues (e.g. due to the presence of saltwater spray within the pipework environment).

The weight of the pipework stems from the fact that the wall thickness of these metal pipes is typically relatively large. For example, in high pressure applications, i.e. those typically above 200 bar, the thickness of the wall of the pipes might be as much as 100 mm, depending on diameter and factor of safety applied. Such pipes are inevitably very heavy.

As for the issue of corrosion, the steel pipes are also indicated to be affected by saltwater-induced corrosion, typically on the outside thereof. However, in addition to that there can be problems with corrosion, or chemical attack, on the inside of the pipes, such as due to the toxic fluids to be found within the CNG itself. After all, CNG fluid can be highly corrosive, especially when in the form of "well stream fluid" (a non-treated or raw version of CNG), and even worse when in presence of condensed phases - they can activate and/or increase corrosion rates. This internal or external corrosion (or chemical attack) can lead to pitting, cracking and other failures or damage to the pipes, i.e. defects.

When these defects present themselves, they are often hard to see, whereby they are difficult to find during inspections, even when sophisticated ultrasonic technologies are employed in these inspections.

These pipes also suffer from further problems, For example, welded joints in metallic piping networks are recognised to provide a point of weakness in the installation, and since the strength of the joint or weld is determined usually by the degree of skill or accuracy of the operators who created the welds, the degree of the weakness can be highly variable. Welding thick-walled steel pipes is also difficult, expensive and time (and energy) consuming.

The present invention therefore aims to overcome or alleviate at least one of the above-identified disadvantages of the known steel or metal-based pipes, and of the known methods of making them, so as to develop the design of pipes in CNG applications.

In particular, an object of the present invention is to provide pipes for CNG applications which are lighter in weight than existing, equivalent, steel pipes, i.e. ones having the same structural capabilities (e.g. terms of flow rates or pressure handling capabilities).

The present invention also aims to eliminate or alleviate one or more of the disadvantages found in pipe joints featuring welds.

The present invention also aims to provide piping that has minimal or lower maintenance requirements for CNG applications than the steel pipes of the prior art.

The present invention also seeks to provide a pipe design that facilitates an easy inspection, preferably a visual inspection, for detecting the presence of significant or developing defects.

### Summary of the invention

According to a first aspect of the present invention, there is provided a hybrid pipe for CNG applications as claimed in the appended claim 1. Optional features are set out in the dependent claims.

Optionally the inner side of the inner metallic layer or sleeve is corrosion resistant with respect to raw CNG.

The term CNG means compressed natural gas, be it well stream fluids, i.e. gas and liquid hydrocarbons received untreated from the source, or treated compressed natural gas - which will have fewer impurities.

CNG fluids can include various potential component parts in a variable mixture of ratios, some in their gas phase and others in a liquid phase, or a mix of both. Those component parts will typically comprise one or more of the following compounds: C₂H₆, C₃H₈, C₄H₁₀, C₅H₁₂, C₆H₁₄, C₇H₁₆, C₈H₁₈, Cg+ hydrocarbons, CO₂ and H₂S, plus potentially toluene, diesel and octane in a liquid state.

Optionally the inner metallic layer or sleeve is both CNG corrosion resistant and CNG impermeable.

The present invention also provides a method of producing a hybrid pipe for CNG applications, as claimed in the appended claim 12.

### Advantages of the invention

An advantage of the present invention is that lighter pipes for CNG operations can be manufactured and installed in CNG pipe networks, both on-shore or off-shore, and especially on ships (whereby higher volumes of CNG to be transported - less of the ship's buoyancy is consumed by the weight of the pipes). Indeed, it is anticipated that the pipes of the present invention will be one sixth to one third of the weight of the equivalent metal pipes, i.e. pipes that have a comparable fluid flow and fluid pressure capacity. These composite pipes will therefore be easier to transport and install while manufactured to the current standard sizes.

The lower weight of the pipes might even allow the pipes to be manufactured in larger (longer) sizes, while still being lighter than the equivalent, albeit shorter, steel pipes. The present invention might therefore permit fewer joints to be necessary within a given network, or a given pipe run.

A further advantage of the present invention is that the pipes will be better thermally insulated compared to the equivalent steel pipes.

The pipes of the present invention can also suffer less from localised weaknesses arising from welded joints.

Another advantage will be that if welding is required, the component to be welded can be a thinner piece of metal, rather than needing to be a weld across the full thickness of the pipe wall.

An additional advantage of the present invention is that forces at the points at which the pipes are supported externally, e.g. at pipe clamps, or other supports, can be reduced - the lower weight pipes need less securement, and will impart a lower load themselves upon those supports.

An additional advantage is that there will be either no, or a reduced amount of, galvanic coupling of the materials at these clamping points.

The pipes of the present invention, therefore, will be easier to support/clamp into their final positions.

Another advantage of the pipes and piping systems of the present invention is that they may be less prone to the often minimal warning of impending catastrophic failures, compared to the metal pipes of the prior art - metal pipes can often completely fail, i.e. burst, with minimal visual warning, whereas composite structures typically provide visual indicators in the run-up to a failure. This can be by way of showing cracks or generic damages to the fabric and/or the matrix of the structure through a change in the optical properties of the composite resin. Therefore, in certain embodiments of the present invention, it will be possible to perform a visual inspection of the pipes from their outside so as to try to detect possible internal damage to the walls of the pipes.

### Brief description of the drawings

The present invention will now be described, purely by way of example, with reference to the accompanying drawings, in which:
Figure 1 is a schematic representation of a pipe in a CNG pipe network formed by welding two pipes, one seamless and one with a welded seam, according to an embodiment of the present invention;
Figure 2 is a schematic cross sectional representation of a welded pipe according to an embodiment of the present invention, with a welding reinforcement and a composite over-wrap, the over-wrap having a constant outer surface profile and a stepped thickness encompassing the welding reinforcement, and;
Figure 3 is a schematic cross sectional representation of a welded pipe according to an embodiment of the present invention, with a welding reinforcement and a composite over-wrap, the over-wrap being moderated to encompass the welding component, thereby maintaining a generally constant thickness;
Figure 4 is a schematic representation of a section of a pipe supported by a clamping arrangement;
Figure 5 is a schematic graphical representation of contact pressure distributions, comparing the values to be found between a support and a) a pipe according to the present invention and b) a metal pipe from the prior art;
Figure 6 is a schematic cross sectional representation of a wall of a pipe according to an embodiment of the present invention showing an internal metallic layer and three composite over-layers, each having different matrix and fibre contents; and
Figures 7a to 7c are schematic illustrations to assist in explaining the mechanism of polymer crazing.

### Detailed description of the invention

The present invention mainly concerns medium to high pressure applications, due to the heavy nature of such pipes when made of steel. Nevertheless, it can likewise be used for lower pressure applications if desired.

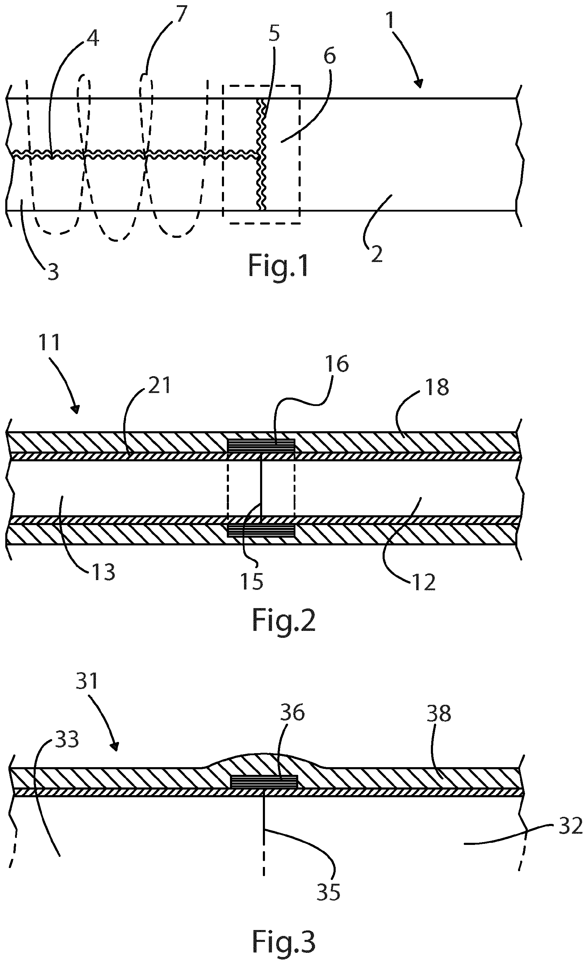

Figure 1 shows a section of pipeline for transportation of CNG. The pressure of the CNG inside the pipe may be 250 bar, whereas the pipe may be designed to bear a pressure of up to 300 bar.

The pipeline, of which the illustration shows only a short section, may extend for hundreds of metres, or further, and may be located on-shore, such as in a CNG distribution plant, or off-shore, such as on a platform for extraction of raw CNG. Alternatively the pipeline may be part of a ship for transportation of CNG. For example, it might be part of a system of pipes interconnecting pressure vessels located on the ship, which vessels are dedicated to the storage/transportation of the CNG on the ship.

High and medium pressure applications typically involve pipes that are required to withstand pressures in excess of 100 bar, and potentially pressures as high as 300 bar. Given these high pressures, the thicknesses of the walls of these pipes is generally very thick.

In general the wall thickness (t) of pipes, as a function of internal pressure (P), can be calculated by using the basic formula t = (Pd)/2σ_{y}, where "d" is the diameter of the pipes and σ_{y} is the strength of the material the pipes are made of (i.e. the yield strength for steel in the conventional pipes of the prior art, and the ultimate strength divided by a safety factor for composite materials).

To provide an example, a range of potential diameters for CNG pipes in ships is typically between approximately 3 inches (7.5 cm) and 12 inches (30 cm). These dimensions are established on the basis of design considerations, i.e. the pipes are designed to carry prescribed quantities of CNG at the required pressures. These parameters determine the flow rate of the compressed gas and, therefore, the sizes of the diameters. In certain applications, diameters above 12 inches (30 cm) can be used. For making these pipes, a typical material used in the industry is API 5L X52 piping steel. With that material, to achieve a desired safe maximum working pressure for the pipe, the typical pipe wall thicknesses in the industry would fall in the range of between 20 and 100 mm, depending on the pressure to be withstood. A substantial area of the overall pipe section is therefore comprised of steel. These steel pipes are therefore very heavy. If the same pipe with the same boundary conditions (e.g. pressure and temperature) is made out of carbon-based composite its thickness would be similar to a steel structure but having 1/3 to 1/5 of the total weight. If made out of glass-based composite its thickness would be up to twice the thickness of a metal structure, but having ½ of the total weight.

The length of pipe shown in Figure 1 is formed by welding two separate pipes 2, 3 together, along an annular weld line 5. One of the pipes 2, as shown on the right, is a seamless pipe, i.e. one made according to rotary piercing or the Mannesmann process. Pipes of this kind are well suited to this application because of the absence of seams along the length of the pipe. This makes it unlikely that defects would be present, or that defects would form, along the length of that section of pipe. The second pipe 3, on the left as shown, however, has been formed using a roll-technique, by bending and then welding the sides of a metallic plate together. This is another well practiced technique.

The material of the two separate pipes can be steel, such as carbon steel, due to it being relatively inexpensive and strong.

If the left-hand pipe 3 was to fail, it would probably do so along the weld line 4, due to the weld line being a potential weakness. Therefore, to compensate for that weakness, the left-hand pipe 3 has been over-wrapped with a resin impregnated tape containing carbon fibres. The wrapping has been installed over the inner pipe by a well known technique: fibre winding (or filament winding). The direction of the winding of the fibre 7 along the pipe 3 is represented schematically by the dashed line in Figure 1. This fibre winding is also known in the art as "hoop wrapping" - it takes the form of hoops that wrap linearly along the longitudinal length of the pipe in a generally uniform way, i.e. with a constant tension and a constant angle.

The fibres may be in the form of single fibres, a yarn or tow of fibres, or a tape of fibres.

Preferably the fibres abut one another on consecutive hoops - they are instead shown in an open hoop arrangement for maintaining the clarity of the drawing.

Since an internal pressure within the pipe, as applied by the pressurised CNG, would tend to open the pipe 3 along the weld line 4, it is the intention of the over-wrapping of the pipe 3 to ensure that that won't occur. The orientation of the reinforcement fibres is therefore preferably substantially perpendicular to the direction of the weld line 4. This maximises the hoop-strength of the over-wrapping, thereby maximising the efficiency of the provided reinforcement against those weld-bursting forces. By abutting the consecutive windings against one another, such perpendicularity of the windings can be maximised. Nevertheless, where a tape is used, the perpendicularity will inevitably be slightly compromised due to the more discernable width of that tape. Nevertheless, the perpendicularity will still be reasonably good. For example, assuming a variance from perpendicular of only 1º is acceptable, that can still be achieved on a 100mm diameter pipe, using a 5mm wide tape, where consecutive windings abut one another, and a 100mm diameter pipe. Further, for larger pipes, that variance can be achieved with wider tapes.

It is preferred that perpendicularity is maintained to at least an accuracy of 5°. Such an angle between the weld line 4 and the fibres of the over-wrapped layer of composite will not significantly compromise the hoop strength of the wrapping.

As mentioned above, the fibres may be single fibres, and such fibres would present a very close approximation to perfect perpendicularity, due to the thin nature of the fibres. However, to reduce the winding time (many thousands of fibre hoops will typically be wound around the pipe), the fibres are typically organised into a winding tape, or some other bundle of fibres, with that bundle of fibres then being wound around the pipe. Fewer actual windings therefore need to be undertaken since each winding lays down many fibres.

Within those bundles, it is preferred that the fibres are linearly arranged in a substantially parallel manner to one another, in the form of a thin strip. Bundles formed with straight parallel fibres can have a lower tendency to stretch due to there being no element of the fibres being available to straighten. However, other low-stretch arrangements for such bundles are also known in the art of fibre winding. For example, the fibres may be arranged in yarns, tows, braids and webs, potentially then with multiple of those arrangements being arranged to form a tape.

The fibres might even be woven to form a fabric or cloth of fibres.

To apply the fibres to the pipe, laying them down there along in hoops that align along the longitudinal axis of the pipe, a winding machine with a translating mechanical head may be used. It can be provided to deliver the fibres, or the tape 7, to the pipe 3 while the pipe rotates on or around its axis, such as by mounting the tape on an inner mandrel, or by rotating it via chucks positioned at the ends thereof.

Before winding the fibres or the tape around the pipe, the fibres are immersed in a resin bath. Alternatively, the resin may be pre-applied in a layer, or it may be sprayed as the fibres are applied onto the surface of the pipe.

The outcome of the deposition of hoops of resin impregnated fibres on and around the pipe is a layer, or layers, of fibre-reinforced polymeric material. These can be built up by consecutive layering (e.g. by winding back-and-forth) so as to provide an overall thickness such as to allow the layers together to contribute structurally to the performance of the pipe.

In Figure 1, the over-wrap layer of fibre reinforced polymer can have a thickness in the range of between 3 and 40 mm.

However, in certain other applications, a thinner layer of metal may be preferred to the thick pipe 3 of Figure 1. That thinner layer can again be over-wrapped with fibre-reinforced polymers, so as to form one or multiple layers of composite material over that inner layer of metal. To provide adequate strength to the pipe, the layer(s) of composite will need to be thicker since the metal layer offers less strength than before.

This alteration in the design can even be taken further such that the thinner layer of metal ends up offering little or no structural strength to the pipe. Such a metal liner would be self supporting, and would withstand the forces of winding. However, they need not have sufficient strength to offer a significant contribution towards the pressure withstanding capabilities of the pipe, once formed, i.e. the composite layer(s) would provide that capability. The function of the liner would then be restricted, effectively, to 1. providing a mandrel over which the fibre can be wound, and 2. providing containment of the CNG - a metal liner is typically less porous than the fibre reinforcement.

Typical liner thicknesses can be in the range of between 0.5 and 2 mm.

Liners can be formed like normal pipes, i.e. they can be side-to-side welded, as shown for the left-hand pipe 3 in Figure 1.

Reverting to the fibre-reinforced polymer used to surround the pipe 3, or the liner, possible fibres that can be used within the invention include at least carbon fibres, glass fibres and Kevlar® (a commercial name for a specific type of aramidic fibre). Accordingly, the outer materials will be, respectively, carbon fibre reinforced polymers (CFRP), glass fibre reinforced polymers (GFRP) or Kevlar® (aramid) reinforced polymers (KRP).

Hoop wrapping of traditionally formed seamed pipes can be enough to reinforce the pipe, or to allow the manufacturer to produce equivalent pipes with less structural steel or metal. However, hoop wrapping will not be sufficient or adequate for reinforcing or coating a pipe with an end-to-end weld 5, like the one shown in Figure 1 for joining two pipes 2, 3 together. For that, a different approach is needed.

According to this aspect of the present invention a reinforcing patch 6, made of a fibrous material, is installed over the weld, as also shown in Figure 1. It covers the end-to-end weld 5, and part of the ends of the two pipes 2, 3.

It is essential that the patch 6 contains fibres that are oriented at least with a significant transversal component, i.e. at least at a 45º angle to the transverse weld. Preferably it has fibres that extend substantially perpendicular to the weld, i.e. to at least 5º of perpendicular. As such they extend substantially transverse to the direction of the weld 5, or parallel to the longitudinal axis of the pipes 2, 3 (due to the transverse nature of the weld 5). This orientation allows the fibres to contribute their tensile strength to the end-to-end weld 5 so as to increase the strength of the pipe 1 at that point in the direction of the axis of the pipe 1.

In this embodiment, the patch 6 is a woven cloth, mat or fabric sheet, for example made with intertwined fibres.

A preferred material that can be included in the patch 6 is a woven roving fabric of fibres. A woven roving fabric of fibres is made of intertwined bundles (roving) of fibres. Each bundle or roving is untwisted, so that it can easily be impregnated by resins.

Roving fabric may also be comprised within the over-wrap 7.

On a reference plane, the woven roving fabric of fibres provides a suitable fibre strength substantially along any direction in the plane. This is because of the presence of fibres within the patch 6 in two, transversely arranged directions, i.e. at 90º to one another. These are often referred to as the "weft" and the "warp". The fabric of this type can thus be laid onto the weld 5 in any orientation within that reference plane and still offer the desired strength contribution to that weld 5 for reinforcing the end-to-end weld 5.

The patch, or the reinforcement sheet 6, in practice, would typically be wrapped as a single elongated sheet around the full circumferential extent of the weld 5, i.e. so as to extend around the whole circumference of the pipe 1. The sheet 6 would additionally extend sideways from the weld 5 onto both pipes 2, 3 so as to covers a length of the welded ends of both pipes 2, 3, whereupon the weld is bridged by the reinforcement 6. Then, as shown in Figure 2,the over-wrap composite layer would wrap over that reinforcement sheet to hold it down over the joint.

Figures 2 and 3 show two different arrangements for the over-wrap with respect to the reinforcement sheet 6. In figure 2, the sheet 6 is given the reference sign 16. In figure 3 it is given the reference sign 36.

Referring first to Figure 2, there is shown a thin metallic liner 21, made of a CNG resistant and CNG impermeable metal, such as stainless steel. As with Figure 1, it is formed as two pieces 12, 13 with a weld therebetween. It therefore has an end-to-end welding line 15 extending around the full circumference thereof. A composite reinforcement patch or strip 16 has then been wound around the weld 15. The composite patch 16 contains a woven roving fabric made with Kevlar® (aramid) fibres. Some of the fibres are disposed with a transverse component with respect to the weld 15.

The reinforcement 16 is only for strengthening the weld 15 between the tubular liners 12, 13.

To provide the pipe with structural hoop-strength properties, a composite over-wrapping 18 is additionally provided. The composite over-wrapping 18 has been deposited by winding a carbon fibre tape, previously impregnated with an epoxy resin, around the liner and over the strip of reinforcing material 16. Because the tape is gradually wound around the liner 21 to form the final pipe 11, an overall uniform thickness for the pipe wall can be obtained. To do this, a thinner layer of the composite material is wound over pipe at the location of the strip 16, while a thicker layer of that composite material is wound around the rest of the liner, i.e. on either side of the reinforcing strip 16.

In Figure 3, a slightly modified embodiment compared to Figure 2 is shown. Two pipe liners 32, 33 are again welded together to form a weld line 35, and a reinforcing strip 36 is again wrapped around it. However, in this embodiment the over-wrapping layer of composite material 38 is wrapped over the reinforcing strip 36 in a manner to retain a substantially constant minimum thickness for that composite material 38 even over the area of the pipe 31 featuring the reinforcing strip 36. This results in a pipe 31 having non-uniform wall thickness, and a visible bump over the reinforcing strip 36. This may be useful for identifying the location of the weld 35.

In these two embodiments, the liners 12, 13, 32, 33 may be 5 mm thick steel pipes, the fibres may be glass fibres and the resin may be an epoxy based resin. Further, the reinforcing strip 16, 36 may be 10 mm thick, while the layer of composite 18, 38 may nominally be 15 mm thick.

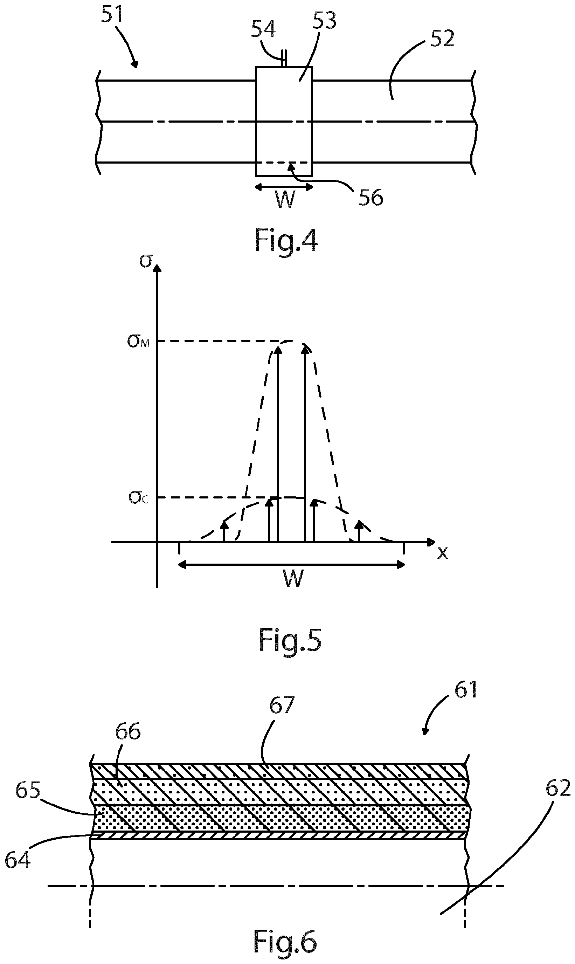

In the embodiment of Figure 4, a composite reinforced pipe 51 is suspended 54 on a bracket 53. The pipe 51 is part of a network of pipes for CNG conveyance located onboard a ship. The bracket 53 rakes a form of a clamp, or compressive ring, that surrounds the pipe along the whole circumference thereof. Such clamps are relatively standard for pipe hangers, and can be acquired as a stock item.

The width w of the clamp determines the contact area 56 of the support on the pipe 51.

Pipe clamping equipment and prior art pipes are usually both made of metal - for example steel. For the prior art pipes, due to their wall thickness being so thick, little if any accommodation was available for mal-aligned clamps, in terms of compression of the pipe's outer surface, i.e. compliance, and as a result of that the pipe clamping equipment would tend to contact the pipe over a small area - smaller than the internal surface area of the clamp, i.e. just the points or lines of contact. This is shown schematically in Figure 5 with the high-peaking line - the smaller area leads to high peak stress σₘ for a given clamping force. The pipe of the present invention, however, is coated with a reinforcing layer of fibre reinforced polymeric material 52. Further, the compression strength of the composite material is likely to be lower than that of the metal of the prior art pipes. As a result, the contact stresses for a given supporting force are likely to be distributed over the whole contact area of the support, as defined by the width w of the clamp. Therefore, a lower peak stress σ_{c} will occur, as also shown, by comparison, in Figure 5.

Because of the structural function of the composite layer in these applications, i.e. the requirement for this layer to carry all or part of the load generated by the internal CNG pressure, the preferred matrix material will be a thermosetting resin as opposed to a thermoplastic resin. In the embodiment of Figure 4, a polyester resin was used. Thermosetting resins typically are about 5 times stronger than equivalent thermoplastic resins.

It is noted that thermoplastic resins are more suited to be used as an interface with a gas, because of their higher degree of impermeability. However, in the applications described here, impermeability is provided by the inner liner or layer of structural metallic material. Thermosetting resins are thus still preferred due to higher mechanical properties, although in practice either could be used.

Additional advantages related to the composite material wrapped around the pipes of the present invention are:
1. An increased thermal insulation of the pipes with respect to the outer environment. This is a by-product of the overall lower degree of thermal conductivity of the composite materials compared to metals;
2. An inert coupling of the pipes with the support at the clamping points, i.e. no, or little, potential for electrochemical activity. This is a by-product of the fact that the composite acts as an electrical insulator, thereby limiting any opportunity for galvanic couplings to exist between the pipes and their supports, in the presence of potentially salty water. This property, however, may be present for only certain resin/fibre combinations, for example glass fibre reinforced composite plastics. After all, carbon fibres may allow the composite to function as a conductor.
3. The pipes of the present invention are particularly damage tolerant. Damage tolerance is a property that is intrinsic in many composites, and is a desired property for the composite layers that cover the pipes of the present invention. Metals can fail catastrophically, i.e. without any significant warning, when they reach their ultimate strength, or when defects such as cracks or corrosion have developed. Crack propagation in metals is usually unstable and unpredictable. With the present invention, however, the mode of failure will tend to give more forewarning. For example, cracks or corrosion pitting may occur in the inner surface of the pipes, e.g. due to the chemical aggressiveness of the CNG. That cracking and/or pitting will then be accelerated by the high internal pressure of the CNG. When the resisting wall thickness reaches its limit, due to the fact that it has been eroded or damaged by the cracking and/or pitting, failure may occur suddenly and violently in a solid metal pipe. This is referred to herein as a catastrophic failure. With the present invention, however, there is an external layer of composite material, and this will work as a barrier against catastrophic failure. Because of the discontinuity between the metal and the composite, cracking and pitting are unlikely to propagate rapidly across from the metal into the composite. Further, the composite can resist a certain degree of delamination anyway. As a result, the regular inspections that need to be carried out on such pipework would be able to identify a deterioration before the pipe bursts, e.g. there may be swelling or discolouration of the outer surface of the pipe. This is explained further below.

Figure 6 illustrates an embodiment of pipe 61 in which visual inspection of possible internal damage in a layer of the composite material is possible. In this example, an inner layer of CNG resistant and CNG impermeable material (a metallic liner 64) is covered with three layers 65, 66, 67 of composite material. The first layer 65, closest to, and in contact with, the liner 64, is a resin rich layer of composite material. The next layer - the intermediate composite layer 66, is then somewhat less rich in resin than the inner composite layer 65, but it is richer in its fibre content. The final, or outer composite layer 67 is then even richer in fibres, and less rich in resin. Other arrangements are possible, although this arrangement is preferred.

In this embodiment the resin is a translucent resin. Further, the fibres are glass fibres - translucent glass fibres. The fibres have been wound around the pipe such as by a method as explained above, i.e. by fibre winding. However, the resin percentage in the three layers will have been altered during that wrapping process, such as by dipping the fibre tapes in a resin bath for longer or shorter time periods.

With this translucent arrangement, if a fracture, crack or pit propagates through the liner's wall 64 and eventually affects the composite layer, it will first impact the resin rich layer 64. This might already be visible externally of the pipe, e.g. through the three layers. However, upon the damage propagating through the first layer 64, it will become increasingly visible.

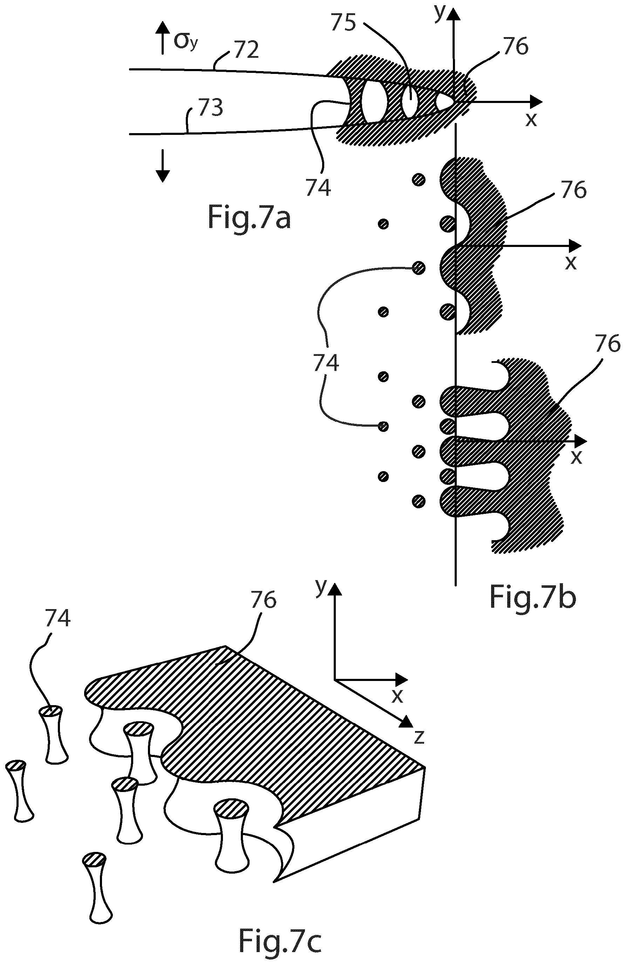

By providing the first layer in the form of a resin rich layer, the propagation of damage through that layer will typically occur by a mechanism called "material crazing". Crazing is a known and documented mechanism of failure of a plastic material, such as a composite resin, whereby a network of fine cracks and gaps develop in the material. The cluster of micro-voids 75 and small fibrils 74 that is characteristic of crazing can be seen schematically in Figures 7a to 7c. Tiny voids 75 and filaments of polymer 74 precede the generation of a fracture - two distinct lips 72, 73 in the material are a sign of a fracture being formed. Crazing is most evident in the direction of propagation of the fracture 76, and results into a local step change of the optical properties of the layer of composite (for example its coefficient of diffraction or coefficient of reflection is changed). This effect can be exploited visually upon inspecting the pipes from the pipe's outside surface, whereby the damage can readily be identified.

In practice the crazing leads to white or opaque spots, lines or blotches within the composite, which marks are very easily seen.

With the translucent resin, and potentially also the translucent fibres, the tendency of the composite to craze upon damage occurring within the pipe allows an operator to be readily trained to detect potentially hazardous damage to the pipe by looking for changes in the optical properties in the pipe, such as this "white spotting". Whether the spots will actually be white, however, will depend upon the colour of the resin/glass or the colour of any leaked fluid into the cracks.

This aspect of the present invention therefor allows a potentially leaking or failing region within the pipe to be recognised by virtue of it being an area which exhibits an anomalous or discontinuous look or coloration.

In this embodiment of the invention, it is also to be observed that the layers arrangement also makes the pipe less likely to fail catastrophically, without prior warning, thereby allowing additional time for pipe replacement or repair. Plant down times are therefore reducible (since minor damage is easier to repair than catastrophic failures), and further the repairs can be more conveniently scheduled, rather than having to be done immediately following a catastrophic failure.

The pipes may be able to carry a variety of gases, such as raw gas straight from a bore well, including raw natural gas, e.g. when compressed - raw CNG or RCNG, or H₂, or CO₂ or processed natural gas (methane), or raw or part processed natural gas, e.g. with CO₂ allowances of up to 14% molar, H₂S allowances of up to 1,000 ppm, or H₂ and CO₂ gas impurities, or other impurities or corrosive species. The preferred use, however, is CNG transportation, be that raw CNG, part processed CNG or clean CNG - processed to a standard deliverable to the end user, e.g. commercial, industrial or residential.

CNG can include various potential component parts in a variable mixture of ratios, some in their gas phase and others in a liquid phase, or a mix of both. Those component parts will typically comprise one or more of the following compounds: C₂H₆, C₃H₈, C₄H₁₀, C₅H₁₂, C₆H₁₄, C₇H₁₆, C₈H₁₈, C₉+ hydrocarbons, CO₂ and H₂S, plus potentially toluene, diesel and octane in a liquid state, and other impurities/species.

These and other features of the present invention have therefore been described hereinabove purely by way of example. Modifications in detail, however, may be made to the invention within the scope of the claims appended hereto.

## Claims

1. A hybrid pipe (61) for CNG applications comprising:
an inner metallic layer or sleeve having an inner side which, in use, is in contact with the CNG, and an outer side; and
a composite material over-wrapping layer or sleeve wrapping over the inner metallic sleeve all around the outer side thereof;
wherein the composite over-wrapping sleeve comprises fibres oriented substantially transversally with respect to the pipe's axis,
the hybrid pipe further comprising multiple overlying over-wrapping layers or sleeves **characterized by** the layers or sleeves having a first composite sleeve (65) in contact with the inner metallic sleeve, and a second composite sleeve (66) wrapped all around the first composite sleeve (65), wherein the resin to fibre ratio for the second composite sleeve (66) is lower than the resin to fibre ratio for the first composite sleeve (65),
the hybrid pipe (61) further comprising an additional over-wrapping sleeve (67) wrapped all around the second composite sleeve (66), wherein the resin to fibre ratio for this third composite sleeve (67) is lower than the resin to fibre ratio for the second composite sleeve (66).

2. A hybrid pipe for CNG applications according to claim 1, wherein the inner metallic layer or sleeve is provided as a liner (64) for the hybrid pipe, the liner optionally having a wall thickness comprised in the range of between 0.5 to 2 mm.

3. A hybrid pipe for CNG applications according to claim 1 or 2, wherein at least one of the composite over-wrapping layers or sleeves is a fibre-wound over-wrap, wherein the over-wrap optionally comprises a fibre tape wound fully around the circumferential extent of the hybrid pipe, wherein the fibre tape is optionally a resin impregnated fibre tape, wherein the tape is optionally formed with fibres that are disposed substantially parallel to each other along the tape's longitudinal direction, wherein the tape is optionally wound around the pipe in a repeating hoop pattern.

4. A hybrid pipe for CNG applications according to claim 1, 2 or 3, wherein at least one of the composite over-wrapping layers or sleeves comprises a thermosetting resin.

5. A hybrid pipe for CNG applications according to any one of the preceding claims, wherein the over-wrapping layer or sleeve has a thickness comprised in the range of between 5 and 40 mm.

6. A hybrid pipe for CNG applications according to any one of the preceding claims, wherein the internal diameter of the pipe is in the range of between 3 inches (approximately 7.5 cm) and 12 inches (approximately 30 cm).

7. A hybrid pipe for CNG applications according to any one of the preceding claims, wherein the fibres comprise at least one of carbon fibres, glass fibres or Kevlar®/aramid fibres, preferably wherein the fibres comprise translucent glass fibres, optionally wherein each over-wrapping layer or sleeve comprises translucent glass fibres to allow visual inspection of the hybrid pipe to detect any defects located at an interface between the inner metallic layer or sleeve and the composite material over-wrapping layer.

8. A hybrid pipe for CNG applications according to any one of the preceding claims, wherein the composite over-wrapping layer or sleeve comprises a translucent resin, optionally wherein each over-wrapping layer or sleeve comprises a translucent resin to allow visual inspection of the hybrid pipe to detect any defects located at an interface between the inner metallic layer or sleeve and the composite material over-wrapping layer.

9. A hybrid pipe for CNG applications according to any one of the preceding claims, wherein the fibres are within 5° of perpendicular to the axis of the pipe, measured circumferentially.

10. A hybrid pipe according to any one of the preceding claims, wherein at least some of the fibres are formed as roving fibres.

11. A piping network for CNG applications comprising a plurality of pipes according to any one of the preceding claims.

12. A method of producing a hybrid pipe (61) for CNG applications according to any one of the preceding claims, comprising providing an inner metallic layer or sleeve having an inner side which, in use, is in contact with the CNG, and an outer side; and
over-wrapping a composite material over the inner metallic sleeve all around the outer side thereof, the composite over-wrap comprising fibres, those fibres being arranged by the wrapping process to be oriented substantially transversally with respect to the pipe's axis, said method being **characterized by** overwrapping said composite materials so that the hybrid pipe comprises multiple overlying over-wrapping layers or sleeves (65, 66, 67), the layers or sleeves having a first composite sleeve (65) in contact with the inner metallic sleeve, and a second composite sleeve (66) wrapped all around the first composite sleeve (65), wherein the resin to fibre ratio for the second composite sleeve (66) is lower than the resin to fibre ratio for the first composite sleeve (65),
the hybrid pipe (61) further comprising an additional over-wrapping sleeve (67) wrapped all around the second composite sleeve (66), wherein the resin to fibre ratio for this third composite sleeve (67) is lower than the resin to fibre ratio for the second composite sleeve (66).

## Patentansprüche

1. Hybridrohrleitung (61) für CNG-Anwendungen, umfassend:
eine innere metallische Schicht oder Hülse mit einer Innenseite, die in der Verwendung in Kontakt mit dem CNG ist, und eine Außenseite; und
eine umhüllende Verbundmaterialschicht oder Hülse, die über die metallische Hülse an deren gesamten Außenseite gehüllt ist;
wobei die umhüllende Verbundhülse Fasern umfasst, die im Wesentlichen quer in Bezug auf die Achse der Rohrleitung ausgerichtet sind,
die Hybridrohrleitung ferner umfassend vielfache darüberliegende umhüllende Schichten oder Hülsen **gekennzeichnet durch** Schichten oder Hülsen mit einer ersten Verbundhülse (65) in Kontakt mit der inneren metallischen Hülse, und eine zweite Verbundhülse (66), die vollständig um die erste Verbundhülse (65) gehüllt ist, wobei das Verhältnis Faser-Harz für die zweite Verbundhülse (66) niedriger als das Verhältnis Faser-Harz für die erste Verbundhülse (65) ist,
die Hybridrohrleitung (61) ferner umfassend eine zusätzliche umhüllende Hülse (67), die vollständig um die zweite Verbundhülse (66) gehüllt ist, wobei das Verhältnis Faser-Harz für diese dritte Verbundhülse (67) niedriger als das Verhältnis Faser-Harz für die zweite Verbundhülse (66) ist.

2. Hybridrohrleitung für CNG-Anwendungen nach Anspruch 1, wobei die innere metallische Schicht oder Hülse als eine Buchse (64) für die Hybridrohrleitung, wobei die Buchse optional eine Wandstärke hat, die im Bereich von zwischen 0,5 bis 2 mm liegt.

3. Hybridrohrleitung für CNG-Anwendungen nach Anspruch 1 oder 2, wobei mindestens eine der umhüllenden Verbundschichten oder Hülsen eine fasergewickelte Umhüllung ist, wobei die Umhüllung optional ein Faserband umfasst, das vollständig um den zirkumferenziellen Umfang der Hybridrohrleitung gewickelt ist, wobei das Faserband optional ein mit Harz imprägniertes Faserband ist, wobei das Band optional mit Fasern gebildet ist, die im Wesentlichen parallel zueinander der Längsrichtung des Bands angeordnet sind, wobei das Band optional in einem sich wiederholenden Reifenmuster um die Rohrleitung gewickelt ist.

4. Hybridrohrleitung für CNG-Anwendungen nach Anspruch 1, 2 oder 3, wobei mindestens eine der umhüllenden Verbundschichten oder Hülsen ein wärmehärtendes Harz umfasst.

5. Hybridrohrleitung für CNG-Anwendungen nach einem der vorherigen Ansprüche, wobei die umhüllende Schicht oder Hülse eine Stärke hat, die im Bereich zwischen 5 und 40 mm liegt.

6. Hybridrohrleitung für CNG-Anwendungen nach einem der vorherigen Ansprüche, wobei der Innendurchmesser der Rohrleitung im Bereich zwischen 3 Zoll (ungefähr 7,5 cm) und 12 Zoll (ungefähr 30 cm) ist.

7. Hybridrohrleitung für CNG-Anwendungen nach einem der vorherigen Ansprüche, wobei die Fasern mindestens eines von Kohlefasern, Glasfasern oder Kevlar®/Aramid-Fasern umfassen, vorzugsweise wobei die Fasern lichtdurchlässige Glasfasern umfassen, optional wobei jede umhüllende Schicht oder Hülse lichtdurchlässige Glasfasern umfasst, um eine Sichtkontrolle der Hybridrohrleitung zur Erkennung von Defekten an einer Schnittstelle zwischen der inneren metallischen Schicht oder Hülse und der umhüllenden Verbundmaterialschicht zu ermöglichen.

8. Hybridrohrleitung für CNG-Anwendungen nach einem der vorherigen Ansprüche, wobei die umhüllende Verbundschicht oder Hülse ein lichtdurchlässiges Harz umfasst, optional wobei jede umhüllende Schicht oder Hülse ein lichtdurchlässiges Harz umfasst, um eine Sichtkontrolle der Hybridrohrleitung zur Erkennung von Defekten an einer Schnittstelle zwischen der inneren metallischen Schicht oder Hülse und der umhüllenden Verbundmaterialschicht zu ermöglichen.

9. Hybridrohrleitung für CNG-Anwendungen nach einem der vorherigen Ansprüche, wobei die Fasern zirkumferenziell gemessen innerhalb von 5° der Senkrechten zu der Achse der Rohrleitung sind.

10. Hybridrohrleitung nach einem der vorherigen Ansprüche, wobei mindestens einige der Fasern als Faserbündel gebildet sind.

11. Rohrleitungsnetzwerk für CNG-Anwendungen, umfassend eine Vielzahl von Rohrleitungen nach einem der vorherigen Ansprüche.

12. Verfahren zum Herstellen einer Hybridrohrleitung (61) für CNG-Anwendungen nach einem der vorherigen Ansprüche, umfassend ein Bereitstellen einer inneren metallischen Schicht oder Hülse mit einer Innenseite, die in der Verwendung in Kontakt mit dem CNG ist, und eine Außenseite; und
Umhüllen eines Verbundmaterials um die innere metallische Hülse vollständig um die Außenseite davon, wobei die Verbundumhüllung Fasern umfasst, wobei diese Fasern durch den Umhüllungsprozess angeordnet sind, um im Wesentlichen quer in Bezug auf die Achse der Rohrleitung ausgerichtet zu sein, wobei das Verfahren durch Umhüllen der Verbundmaterialen gekennzeichnet ist, sodass die Hybridrohrleitung vielfache darüberliegende umhüllende Schichten oder Hülsen (65, 66, 67) umfasst, wobei die Schichten oder Hülsen eine erste Verbundhülse (65) in Kontakt mit der inneren metallischen Hülse haben, und eine zweite Verbundhülse (66), die vollständig um die erste Verbundhülse (65) gehüllt ist, wobei das Verhältnis Faser-Harz für die zweite Verbundhülse (66) niedriger als das Verhältnis Faser-Harz für die erste Verbundhülse (65) ist,
die Hybridrohrleitung (61) ferner umfassend eine zusätzliche umhüllende Hülse (67), die vollständig um die zweite Verbundhülse (66) gehüllt ist, wobei das Verhältnis Faser-Harz für diese dritte Verbundhülse (67) niedriger als das Verhältnis Faser-Harz für die zweite Verbundhülse (66) ist.

## Revendications

1. Tuyau hybride (61) pour des applications relatives au GNC, comprenant :
une couche ou gaine métallique interne présentant un côté interne, qui, en cours d'usage, est au contact du GNC, et un côté extérieur ; et
une couche ou gaine sur-enveloppante en matériau composite, enveloppant la gaine métallique interne tout autour de son côté extérieur ;
la gaine sur-enveloppante en matériau composite comprenant des fibres orientées dans un sens substantiellement transversal relativement à l'axe du tuyau,
le tuyau hybride comprenant en outre de multiples couches ou gaines sur-enveloppantes superposées, **caractérisées par le fait que** les couches ou gaines possèdent une première gaine composite (65) au contact de la gaine métallique interne, et une deuxième gaine composite (66) s'enveloppant tout autour de la première gaine composite (65), le ratio résine / fibre pour la deuxième gaine composite (66) étant inférieur au ratio résine / fibre pour la première gaine composite (65), le tuyau hybride (61) comprenant en outre une gaine sur-enveloppante additionnelle (67) enveloppée tout autour de la deuxième gaine composite (66), le ratio résine / fibre pour cette troisième gaine composite (67) étant inférieur au ratio résine / fibre pour la deuxième gaine composite (66).

2. Tuyau hybride pour applications relatives au GNC selon la revendication 1, la couche ou gaine métallique interne servant de chemise (64) pour le tuyau hybride, la chemise possédant en option une paroi dont l'épaisseur est comprise dans la plage de 0,5 à 2 mm.

3. Tuyau hybride pour applications relatives au GNC selon la revendication 1 ou 2, au moins une des couches ou gaines sur-enveloppantes composites étant un sur-enveloppement à fibre enroulée, la fibre enroulée comprenant en option un ruban de fibre enveloppé de façon intégrale autour de l'étendue circonférentielle du tuyau hybride, le ruban de fibre étant, en option, un ruban de fibre imprégné de résine, le ruban étant formé en option de fibres disposées de façon substantiellement parallèle entre elles dans le sens longitudinal du ruban, le ruban étant, en option, enveloppé atour du tuyau dans un motif répété en arceau.

4. Tuyau hybride pour applications relatives au GNC selon la revendication 1, 2, ou 3, au moins une des couches ou gaines sur-enveloppantes composites comprenant une résine thermodurcissable.

5. Tuyau hybride pour applications relatives au GNC selon une quelconque des revendications précédentes, l'épaisseur de la couche ou gaine sur-enveloppante étant comprise dans la plage de 5 à 40 mm.

6. Tuyau hybride pour applications relatives au GNC selon une quelconque des revendications précédentes, le diamètre interne du tuyau étant compris dans la plage allant d'environ 7,5 cm (3 pouces) à environ 30 cm (12 pouces).

7. Tuyau hybride pour applications relatives au GNC selon une quelconque des revendications précédentes, les fibres comprenant au moins une des suivantes : fibres de carbone, fibres de verre, ou fibres Kevlar®/aramide, de préférence les fibres comprenant des fibres de verre translucides, chaque couche ou gaine sur-enveloppante comprenant en option des fibres de verre translucides pour permettre l'inspection visuelle du tuyau hybride afin de détecter d'éventuels défauts situés sur une interface entre la couche ou gaine métallique interne et la couche sur-enveloppante en matériau composite.

8. Tuyau hybride pour applications relatives au GNC selon une quelconque des revendications précédentes, la couche ou gaine sur-enveloppante composite comprenant une résine translucide, chaque couche ou gaine sur-enveloppante comprenant en option une résine translucide pour permettre un contrôle visuel du tuyau hybride afin de détecter d'éventuels défauts situés sur une interface entre la couche ou gaine métallique interne et la couche sur-enveloppante en matériau composite.

9. Tuyau hybride pour applications relatives au GNC selon une quelconque des revendications précédentes, les fibres se trouvant au plus à 5° de la perpendicularité à l'axe du tuyau, mesurée dans un plan circonférentiel.

10. Tuyau hybride selon une des revendications précédentes, au moins certaines des fibres étant formées comme fibres de fuseau.

11. Réseau de tuyaux pour applications relatives au GNC, comprenant une pluralité de tuyaux selon une quelconque des revendications précédentes.

12. Méthode de production d'un tuyau hybride (61) pour applications relatives au GNC, selon une quelconque des revendications précédentes, comprenant la mise en place d'une couche ou gaine métallique interne possédant un côté interne, qui, en cours d'usage, est au contact du GNC, et un côté extérieur ; et
le sur-enveloppement d'un matériau composite au-dessus de la gaine métallique interne tout autour de son côté extérieur, le sur-enveloppement composite comprenant des fibres, ces fibres étant agencées par le processus d'enveloppement pour être orientées dans une direction substantiellement transversale relativement à l'axe du tuyau, ladite méthode étant **caractérisée par** le sur-enveloppement desdits matériaux composites de sorte que le tuyau hybride comprenne de multiples couches ou gaines sur-enveloppantes superposées (65, 66, 67), les couches ou gaines possédant une première gaine composite (65) au contact de la gaine métallique interne, et une deuxième gaine composite (66) enveloppée tout autour de la première gaine composite (65), le ratio résine / fibre pour la deuxième gaine composite (66) étant inférieur au ratio résine / fibre pour la première gaine composite (65),
le tuyau hybride (61) comprenant en outre une gaine sur-enveloppante additionnelle (67) enveloppée tout autour de la deuxième gaine composite (66), le ratio résine / fibre pour cette troisième gaine composite (67) étant inférieur au ratio résine / fibre pour la deuxième gaine composite (66).
